# EUROPÄISCHE PATENTSCHRIFT

(11) **EP 1 503 839 B1**
(45) Veröffentlichungstag und Bekanntmachung des Hinweises auf die Patenterteilung: **05.03.2008**
(21) Anmeldenummer: 03732306.0
(22) Anmeldetag: 02.05.2003
(51) Int. Cl.: B01D 25/21

(54) **PLATTENPAKET FÜR EINE FILTERPRESSE**
SET OF PLATES FOR A FILTER PRESS
ENSEMBLE DE PLAQUES POUR UN FILTRE-PRESSE

(30) Priorität: 10.05.2002 DE 10221061
(43) Veröffentlichungstag der Anmeldung: 09.02.2005
(73) Patentinhaber: JVK Filtration Systems GmbH, 91166 Georgensgmünd (DE)
(72) Erfinder: HERMANN, Manfred, 90491 Nürnberg (DE); KNYE, Ulrich, 91166 Georgensgmünd (DE); SALBAUM, Bernhard, 91187 Mühlstetten (DE)
(74) Vertreter: Tergau & Pohl Patentanwälte
(86) Internationale Anmeldenummer: PCT/EP2003/004635
(87) Internationale Veröffentlichungsnummer: WO 2003/095063

(56) Entgegenhaltungen:
- EP-A- 0 978 304
- DE-A- 4 119 166
- GB-A- 1 505 713
- US-A- 5 658 468

## Beschreibung

Die Erfindung betrifft ein Plattenpaket für eine Filterpresse.

Aus dem Stand der Technik - beispielsweise der GB-A-1 505 713 und der US-A-5,658,468 - sind Membranfilterpressen mit austauschbaren Membranen für die Fest-Flüssig-Trennung bekannt. Derartige Filterpressen sind in vielfältigen Anwendungsbereichen, beispielsweise Abwasser, Chemie, Lebensmittel, Metallurgie, Pharmazie etc. einsetzbar. Kammerfilterpressen weisen Filtrationskammern auf, welche durch speziell geformte Platten gebildet werden. Dabei ist jede Kammer mindestens einseitig mit einer Membran versehen. Es kann so jede zweite Platte als beidseitig mit Membranen belegte Membranplatte ausgestaltet sein. Strömt nun Suspension unter Druck in die geschlossene Filterpresse ein, so baut sich auf dem Filtermittel ein Filterkuchen auf, bis die beiden Kuchenschichten zusammengewachsen und die Kammern ganz mit Feststoff gefüllt sind. An diesen ersten Schritt der Druckfiltration schließt sich ein zweiter Schritt, die Pressfiltration an. Die elastischen Membranen werden bei der Pressfiltration mit einem Druckmedium aufgebläht, so dass sie sich ausdehnen und den Kuchenraum verengen. Dabei wird der dort eingebettete Kuchen komprimiert, wodurch die Restfeuchte in den Hohlräumen des Kuchens weiter verringert wird. Durch den Einsatz der Pressfiltration können extrem hohe Filtrationsdrücke während der Druckfiltration vermieden werden, was zu einer Einsparung von Investitions- und Energiekosten führt.

Zur Abdichtung der Membran in der Membranträgerplatte ist die Membran mit einem umlaufenden Wulst versehen, der in eine ebenfalls umlaufende Nut der Trägerplatte eingebracht und gehalten ist. Bei Drücken oberhalb 15 bar kann der Wulst jedoch derart deformiert werden, dass keine Abdichtung mehr erfolgt und das Auspressmedium, beispielsweise Luft oder Wasser, nach Außen entweichen kann.

Bei den bekannten Membranplatten weist die Membran eine Öffnung auf, durch welche die Trübe in die Filtrationskammer eintritt. Die Membran ist dabei um die Trübebohrung abgedichtet und befestigt. Sie weist an dieser Stelle eine Dichtwulst auf und ist darüber hinaus mit einem Flansch oder einem Klemmring oder Klemmrohr mit der Membranträgerplatte verbunden. Im Bereich um die Eintrittsstelle der Trübe bildet sich während der Filtration kein oder nur ein dünner, weicher Kuchen. Beim nachfolgenden Auspressvorgang wird die Membran dann in diese Vertiefung im Kuchen und weiter in die Trübebohrung hineingedrückt. Die Befestigung der Membran in diesem Bereich kann dazu führen, dass die Membran an dieser Stelle bei Drücken über 15 bar überdehnt wird, und nach kurzer Betriebsdauer zerreißt oder aber aus der Befestigung herausgezogen wird.

Der Erfindung liegt die Aufgabe zugrunde, ein Plattenpaket für eine Filterpresse so zu gestalten, dass die Filterpresse mit Drücken über 15 bar betrieben werden kann, ohne die Membran zu überdehnen. Diese Aufgabe ist durch das Plattenpaket gemäß Anspruch 1 gelöst. Die rückbezogenen Ansprüche betreffen Weiterbildungen dieses Plattenpakets.

Das erfindungsgemäße Plattenpaket für eine Filterpresse weist eine Anzahl von Membranplatten und Kammerplatten auf. Die einzelnen meist quadratischen Platten sind abwechselnd nebeneinander angeordnet. Das sich dadurch ergebende Plattenpaket wird vorzugsweise in einem Filterpressengestell zwischen einem festen Kopfstück und einem beweglichen Endstück mittels einer Schließvorrichtung an seinem gesamten Umfang eingespannt. Dabei sind die Platten vorzugsweise senkrecht angeordnet.

Die erfindungsgemäße Membranplatte weist eine Membranträgerplatte mit einem Trägerplattenrand zur Kontaktierung wenigstens einer Kammerplatte auf. Kontaktiert die vorzugsweise aus einem thermoplastischen Kunststoff wie PP, PE, PVDF oder ähnlichem bzw. einem Metall, insbesondere Aluminium, bestehende Membranplatte eine benachbarte Kammerplatte, so wird eine Filtrationskammer zwischen der Membranoberseite und der Kammerplatte ausgebildet. Darüber hinaus weist die erfindungsgemäße Membranplatte eine Membran auf. Der Rand der Membran endet dabei vor dem als eigentliche Dichtfläche dienenden Trägerplattenrand der Membranträgerplatte. Die Membran ist dabei in eine an der Membranträgerplatte vorgesehene umlaufende Nut eingesetzt. Nut und Wulst bilden dabei vorzugsweise einen ununterbrochenen Halte- bzw. Dichtring. Die Nut bzw. der Wulst kann jedoch auch durch Querelemente, beispielsweise Zuläufe oder Abläufe unterbrochen sein. Mit anderen Worten besteht vorzugsweise zwischen der Membran und der Membranträgerplatte im Bereich des Dichtrandes keine feste Verbindung durch Verschraubung oder Verschweißung. Bei der Pressfiltration kann der Druck des Nachpressmediums nur bei geschlossener Filterpresse aufrechterhalten werden. Liegt bei geöffneter oder sich öffnender Presse ein Membraninnendruck an, bewegt sich die Membran aus der Nut, wobei eine gefahrlose Druckentlastung ohne Zerstörung der Membran erfolgt. Der Aufwand für Sicherheitsvorkehrungen ist dadurch erheblich reduziert.

Die erfindungsgemäße Membranplatte gewährleistet durch den Einsatz der - innerhalb oder außerhalb der Presse - austauschbaren erfindungsgemäßen Membran einen besonders sicheren Betrieb der Filterpresse. Da die Membran nicht durch einen Trübeeinlass unterbrochen ist, kann sie sich während der Druckfiltration mit ihrer gesamten Membranunterseite an die Oberfläche der Membranträgerplatte anlegen. Dadurch wird eine besonders gleichmäßiger Aufbau des Filterkuchens ermöglicht. Durch die besonders einfache Gestaltung sowohl der Membran, als auch der Fixierung der Membran an der Membranträgerplatte ist die Membranplatte besonders robust und kostengünstig herzustellen. Die Membranplatte ist dabei für alle Auspressmedien, wie beispielsweise Luft, Wasser oder Öl, geeignet.

Die erfindungsgemäße Kammerplatte für eine Filterpresse, die ebenso wie die Membranplatte einen Plattenrand zur Kontaktierung wenigstens einer benachbarten Platte aufweist, verfügt über eine Anzahl von Trübeeinläufen zum Einbringen der Trübe in die Filtrationskammer. Erfindungsgemäß ist wenigstens ein Trübeeinlauf je Kammerplatte vorgesehen. Es können in einer Kammerplatte aber auch mehrere Trübeeinläufe angeordnet sein. Dies ist insbesondere bei großen Plattengrößen sinnvoll. Der Trübeeinlauf weist dabei eine Einlauföffnung auf, die vom Kammerplattenrand beabstandet angeordnet ist. Die Kammerplatte besteht, wie auch bereits die Membranplatte, aus einem thermoplastischen Kunststoff oder Metall. Der Trübeeinlauf in Form eines Kanals oder einer Bohrung kann daher durch einfaches bearbeiten in die Kammerplatte eingearbeitet werden. Das an der Kammerplattenoberfläche anliegende Filtertuch wird an der vorzugsweise runden Einlauföffnung vorteilhafter Weise mit einem Halteflansch oder einem ähnlichen Befestigungselement fixiert. Von Vorteil ist weiterhin, dass das Filtertuch für die Kammerplatte besonders einfach hergestellt werden kann. Eine besondere Bearbeitung der Öffnungsränder der Filtertuchöffnung im Bereich der Einlauföffnung ist nicht erforderlich.

Die Einlauföffnung in der Kammerplatte ist dabei gegenüber einem im Wesentlichen ebenen Bereich der Membran angeordnet. Dieser ebene Bereich ist dabei vorzugsweise derart angeordnet und ausgebildet, dass er die Einlauföffnung vollständig überdeckt. Mit anderen Worten überlappt der ebene Bereich die Öffnungsränder der Einlauföffnung in der Kammerplatte, wenn man senkrecht zur Kammerplattenlängsrichtung in Richtung auf den Austrittskanal blickt. Beim Auspressen während der Pressfiltration legt sich die Membran mit der Verstärkung also auf den Trübeeinlauf bzw. in den Bereich des unvollständig gebildeten Filterkuchens. Ebenso wird ein Eindrücken der Membran in die Einlauföffnung währende der Pressfiltration verhindert. Der das Filtertuch an der Kammerplatte fixierende Halteflansch dient dabei zusätzlich als Abstützfläche für die Membran.

Die erfindungsgemäße Membran für eine Membranplatte zum Einsetzen in eine Filterpresse weist nach Anspruch 1 eine von einem Membranrand eingeschlossene Membranoberfläche auf, die frei von Durchbrüchen ist. Die Membran wird also ausschließlich durch die Pressenschließkraft der gegenüberliegenden Platte gehalten. Es sind keine zusätzlichen Befestigungselemente wie beispielsweise Schrauben, Flansche, Ringe oder Klemmen zur Fixierung der Membran an der Membranträgerplatte vorgesehen. Die gegenüberliegende Platte dient dabei als Gegenlager. Somit ist eine schnellere Montage und Demontage der Membran möglich. Durch die einfache Geometrie der wirksamen Membranfläche wird ein homogener Kuchenaufbau erreicht. Wird der Filterkuchen nach der Filtration ausgewaschen, kann eine gleichmäßigere Auswaschung erreicht werden, da durch den homogenen Kuchenaufbau Kanal- oder Rissbildungen im Filterkuchen vermieden werden. Als Membranmaterial werden beispielsweise spezielle Polyethylen- (PE), Polypropylen- (PP) oder Polyvinylidenfluoridwerkstoffe (PVDF) verwendet, wodurch eine gute chemische Beständigkeit der Membran auch bei hohen Temperaturen erreicht wird. Aber auch andere Spezialelastomere wie EPDM, NBR, SBR, VITON etc. können verwendet werden. Während der Filtration passt sich die hochelastische Membran den verfahrenstechnisch bedingten Unebenheiten der Kuchenoberfläche und den verschiedenen Packungsdichten im Kuchen ohne bleibende Deformationen leicht an, wodurch eine gleichmäßige und intensivere Kuchenauspressung erfolgt.

Darüber hinaus weist die Membranoberfläche eine Vielzahl von Abstützelementen auf. Diese nach Art von Rippen oder Noppen ausgebildeten Abstützelemente führen zu einer Kannelierung der Membranoberfläche, die zur Abstützung des Filtertuches aus vorzugsweise Filz oder Textilgewebe dient und den Ablauf des Filtrats ermöglicht. Die Membranoberfläche ist dabei vorzugsweise inert und hydrophob. Da sie auch schmutzabweisend wirkt, wird ein Zusetzen der Ablaufkanäle verzögert oder verhindert. Die Oberfläche der Abstützelemente ist darüber hinaus relativ glatt, so dass die Belastung des Filtertuches durch Reibung zwischen Filtertuch und Membranoberfläche gering ist.

Schließlich weist die Membran den im Wesentlichen ebenen Bereich auf, dessen Oberfläche größer ist als die Oberfläche eines Abstützelements. Dieser ebene Bereich ist dabei vom Membranrand beabstandet angeordnet. Er dient in der Montageendposition des Plattenpakets unter anderem dazu, die in die Filtrationskammer eingelassene Trübe nach allen Richtungen hin gleichmäßig zu verteilen, und ist zu diesem Zweck in der Montageendposition gegenüber einem Trübeeinlauf angeordnet.

In der in Anspruch 3 beanspruchten Ausführungsform der Erfindung weist der ebene Bereich eine Verstärkung auf. Diese dient vorrangig dazu sicherzustellen, dass die Membran in ihrer Betriebsposition während der Pressfiltration nicht in den Trübeeinlauf eingedrückt wird.

Vorzugsweise ist die Verstärkung dadurch gebildet, dass das Membranmaterial in diesem Bereich einen verstärkten Querschnitt, also eine Verdickung, aufweist. Die Verstärkung der Membran kann alternativ oder gleichzeitig dadurch erreicht werden, dass ein Verstärkungsmaterial, beispielsweise aus einem Kunststoff, Metall oder Gewebe etc., in das Membranmaterial eingelegt ist. In beiden Fällen ist die Verstärkung der Membran vorzugsweise derart Dimensioniert, dass sich, zusammen mit den Abstützelementen, eine zur Filtrationskammer hin gerichtete, im Wesentlichen plane Membranoberfläche zur Auflage des Filtertuches bildet.

In einer weiteren bevorzugten Ausführungsform der Erfindung nach Anspruch 6 weist die Membran eine umlaufende Wulst zum Eingreifen in eine Nut einer Membranträgerplatte auf, wobei an der Wulst eine Dichtlippe fest angeformt ist, deren Dichtlippenmaterial eine geringere Shorehärte aufweist als das Wulstmaterial. Der Wulst dient dabei sowohl der Fixierung der Membran in der Membranträgerplatte, als auch als Dichtwulst zum Abdichten des Plattenpakets. Die als eine Art Dichtring an der Wulst angebrachte vorzugsweise umlaufende Dichtlippe dient dabei insbesondere zum Abdichten der Druckkammer zwischen der Membranunterseite und der Membranträgerplatte. Die Lippe ist mit dem Wulst einstückig verbunden. Werden als Dichtlippenmaterial und Wulstmaterial Kunststoffe verwendet, so wird die Dichtlippe vorzugsweise mit dem Wulst verschmolzen.

Der Wulst dient vorzugsweise gleichzeitig als Auflage und damit auch als Abdichtung zwischen der Membranträgerplatte und einer benachbarten Platte, insbesondere einer Kammerplatte.

Nach Anspruch 7 ist es weiterhin vorteilhaft, den Membranrand zur Membranoberfläche mit einer Dichtleiste zu versehen. Diese Dichtleiste ist vorzugsweise einstückig am Wulstmaterial angeformt und dient der zusätzlichen Abdichtung des auf der Membranoberfläche aufliegenden Filtertuchs, insbesondere zur Beseitigung von Leckagen zwischen Membran und Filtertuch.

Das Wulstmaterial ist nach der Lehre des Anspruchs 9 mit dem Membranmaterial identisch. Dies bedeutet, dass der Wulst in einfacher Weise zusammen mit der Membran hergestellt werden kann. Wulst und Membran sind dabei vorzugsweise einstückig ausgebildet.

Bei einer besonders bevorzugten Ausführungsform gemäß Anspruch 10 weist das Wulstmaterial eine Shorehärte von etwa 90° ShA auf. Aufgrund dieser hohen Härte wird der Wulst auch bei hohen Drücken nicht deformiert, was zu einem besonders sicheren Funktionieren der Membrane führt. Nach der Lehre des Anspruchs 11 weist das Dichtlippenmaterial hingegen eine geringere Shorehärte auf, als das Wulstmaterial. Die Shorehärte des Dichtlippenmaterials beträgt vorzugsweise 70 ± 5° ShA. Von der Shorehärte des Wulstmaterials (90 ± 5° ShA) unterscheidet sich die Shorehärte des Dichtlippenmaterials also um 10 bis 25° ShA. Die somit wesentliche weichere Dichtlippe wird bei Beaufschlagung mit Auspressdruck auf den Spalt zwischen Wulst und Nutwand der Membranträgerplatte gedrückt, was zu einer besonders sicheren Abdichtung führt.

Für eine besonders wirksame Abdichtung ist der Wulst nach Art eines U-förmigen Haltevorsprungs aus Vollmaterial ausgebildet, wobei die Dichtlippe an der äußeren Unterkante des Haltevorsprungs angeformt ist (Anspruch 12). Mit anderen Worten befindet sich die Dichtlippe im Zwickel zwischen U-Grund und dem dem Membranträgerplattenrand zugewandten U-Schenkel des Haltevorsprungs.

Dichtlippenmaterial und Wulstmaterial sind dabei vorzugsweise farblich unterschiedlich ausgebildet (Anspruch 13). Dadurch kann man sowohl bei der Herstellung der Membran, als auch bei der Wartung der Membran leicht erkennen, ob die Dichtlippe wie gewünscht am Wulst angeformt ist, oder ob ein Austausch der Membran notwendig wird.

Besonders vorteilhaft ist eine Membranplatte nach der Lehre des Anspruchs 15, die um ihre Mittellängsachse spiegelsymmetrisch aufgebaut ist. Somit kann an beiden Seiten der Membranträgerplatte eine Membran gehalten sein, so dass die Membranplatte zwei Wirkseiten aufweist.

Besonders vorteilhaft ist es, wenn für jede Trübezuleitung an jeder Kammerplatte ein Einzelanschluss vorgesehen ist. Beispielsweise kann für die Trübezufuhr zu den einzelnen Filtrationskammern eine externe Anschlussleitung vorgesehen sein, an die die Kammerplatte mit lösbaren Schläuchen angeschlossen sind. Hierdurch wird eine einfache Möglichkeit gegeben, zu prüfen, ob alle Kammern mit Trübe gefüllt werden. Eine sichere und gleichmäßige Befüllung der Kammern ist besonders bei hohen Drücken wichtig, damit eine gleichmäßige Auslenkung der Membran über die gesamte Filterfläche und damit eine geringstmögliche Belastung der Membran gewährleistet ist.

Die Einlauföffnung schließt sich nach der Lehre des Anspruchs 17 an einen als Trübekanal dienenden Einlaufkanal an, der sich vom Kammerplattenrand in das Kammerplatteninnere hinein erstreckt. Der Einlaufkanal verläuft dabei von der Außenseite des Kammerplattenrandes bis zur Einlauföffnung und kann dabei sowohl parallel zur Kammerplattenlängsrichtung als auch in einem Winkel dazu angeordnet sein. Eine schräge Anordnung des Einlaufkanals führt, insbesondere im Zusammenhang mit einem konischen Querschnittsverlauf des Einlaufkanals, zu einer besonders sicheren Befüllung der Filtrationskammer mit der Trübe. Die Länge des Einlaufkanals bemisst sich nach der Größe der Filtrationskammer. Der Einlaufkanal ist vorzugsweise derart dimensioniert, dass die Einlauföffnung weit genug vom Rand der Filtrationskammer entfernt ist, um eine ausreichend gleichmäßige Befüllung der Filtrationskammer zu gewährleisten. Auf der anderen Seite soll ein zu langer Einlaufkanal vermieden werden, um eine unnötige Verschmutzung und damit Fehleranfälligkeit des Einlaufkanals zu vermeiden.

In einer weiteren bevorzugten Ausführungsform der Erfindung erstreckt sich Austrittskanal im Bereich der Einlauföffnung im Wesentlichen senkrecht zur Kammerplattenlängsrichtung (Anspruch 16). Damit wird gewährleistet, dass die aus der Einlauföffnung austretende Trübe im Wesentlichen senkrecht auf die gegenüberliegend angeordnete Membran der Membranplatte auftrifft, um eine gleichmäßige Verteilung der Suspension in der Filtrationskammer zu gewährleisten.

Besonders vorteilhaft ist die Ausführungsform gemäß Anspruch 18, nach der Trübeeinlauf ein Rückschlagelement aufweist. Dieses Rückschlagelement, das vorzugsweise in Form einer Rückschlagklappe oder eines Rückschlagventils ausgeführt ist, dient dazu, die Einlauföffnung in Richtung Einlaufkanal zu sperren. Die sich in der Filtrationskammer befindende Trübe oder ein weicher Filterkuchen kann somit während des Auspressens während der Pressfiltration nicht durch den Einlaufkanal entweichen, wodurch eine Verstopfung verhindert wird. Ebenso wird das Eindrücken der Membran in die Einlauföffnung während der Pressfiltration verhindert.

Die Kammerplatte ist vorzugsweise um ihre Mittellängsachse spiegelsymmetrisch aufgebaut (Anspruch 19). Dies bedeutet, dass sich an einem mittig in der Kammerplatte angeordneten Einlaufkanal zwei Austrittskanäle anschließen, die an ihren Enden zwei Einlauföffnungen in benachbarte Filtrationskammern bilden.

Eine Filterpresse mit dem erfindungsmäßigen Plattenpaket gewährleistet daher einen besonders sicheren und zuverlässigen Arbeitsablauf.

Da kritische Stellen bei der durchbruchsfreien Membran vermieden werden, ist die Membran wesentlich belastbarer und damit zuverlässiger. Eine erfindungsgemäße Filterpresse kann daher in einem Druckbereich bis mindestens 50 bar Auspressdruck arbeiten, ohne dass es zu einer übermäßigen Belastung der Membran kommt. Durch den hohen Auspressdruck kann die Filtrationszeit erheblich verkürzt werden. Aber auch wenn bei der Pressfiltration ein niedrigerer Auspressdruck, beispielsweise bis 15 bar, verwendet wird, lässt sich die erfindungsgemäße Membran verwenden. Alle Einzelteile der Erfindung lassen sich also sowohl bei niedrigen, als auch bei extrem hohen Drücken verwenden, wodurch eine universelle Verwendung gewährleistet ist.

Die erfindungsgemäßen Membran- und Kammerplatten können auch in herkömmlichen Filterpressen eingesetzt werden, beispielsweise unter Verwendung von Umlenk- oder Adapterplatten. Insgesamt ergibt sich eine Membrankammerfilterpresse mit einem unkomplizierten konstruktiven Aufbau, die einfach zu Warten ist und eine hohe Funktionssicherheit aufweist.

Nachfolgend wird die Erfindung anhand eines Ausführungsbeispiels beschrieben, dass anhand der Abbildungen näher erläutert wird. Hierbei zeigen
- Fig. 1: eine Draufsicht auf eine erfindungsgemäße Membran,
- Fig. 2: eine Schnittansicht einer erfindungsgemäßen Membranplatte,
- Fig. 3: eine Schnittansicht einer erfindungsgemäßen Kammerplatte,
- Fig. 4: eine Schnittansicht durch eine erfindungsgemäße Membranplatte in Kontakt mit einer erfindungsgemäßen Kammerplatte.

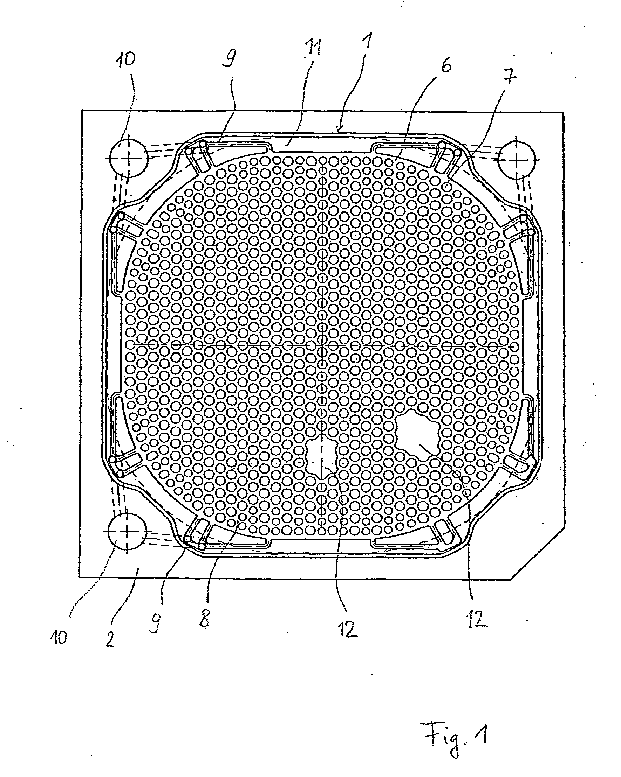

Fig. 1 zeigt eine erfindungsgemäße Membran 1 in Draufsicht. Die Membran 1 ist dabei auf einer Membranträgerplatte 2 fixiert. Dabei greift eine an der Membranunterseite 3 angebrachte umlaufende Wulst 4, in Fig. 1 mit durchbrochener Linie dargestellt, in eine entsprechend ausgeformte Nut 5 an der Membranträgerplatte 2 ein. An der Membranoberfläche 6 ist eine Vielzahl von Noppen 7 als Abstützelemente für ein Filtertuch (nicht dargestellt) angebracht. Die Noppenzwischenräume bilden Ablaufkanäle 8, durch die die Trübe während der Filtration ablaufen kann. An diese Ablaufkanäle 8 schließen sich entsprechend weiterführende Kanäle in Form von Ablaufbohrungen 9 an, die die Trübe schließlich in Eckbohrungen 10 leiten, die in den Ecken der im Wesentlichen quadratischen Membranträgerplatte 2 angebracht sind. Die Ablaufkanäle 8 und -bohrungen 9 sind dabei derart dimensioniert, dass auch große Filtratmengen schnell angeführt werden und das Zusetzen bzw. Verstopfen durch Feststoffe und/oder Auskristallisation weitgehend vermieden wird. Die Noppen 7 sind vom Membranrand 11 umgrenzt. Vom Membranrand 11 beabstandet sind auf der Membranoberfläche 6 ebene Bereiche 12 angeordnet, die eine gegenüber einem einzelnen Noppen 7 große Oberfläche aufweisen, welche nicht durch einen Abflusszwischenraum 8 unterbrochen wird.

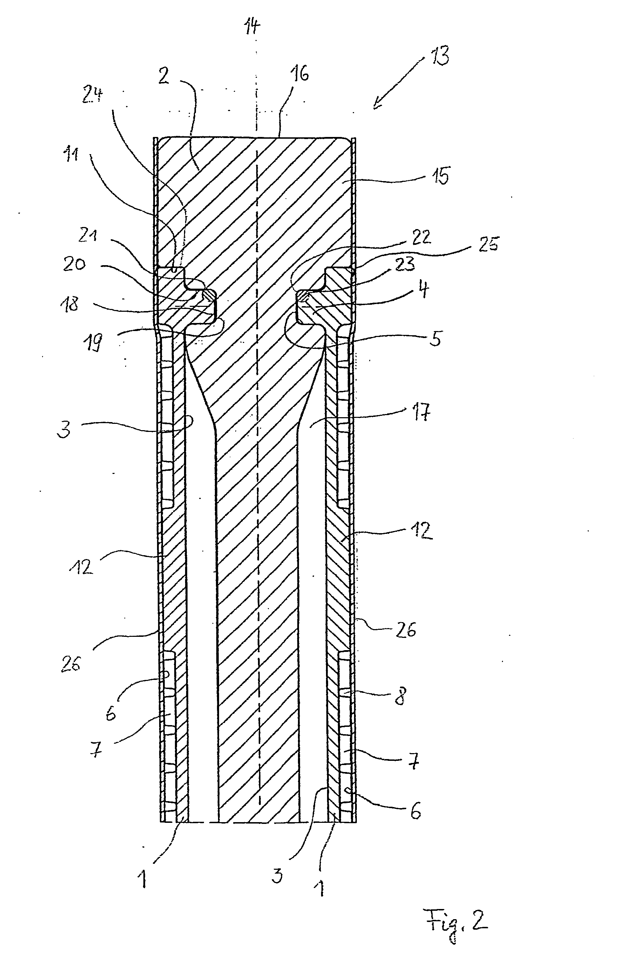

Fig. 2 zeigt einen Schnitt durch eine erfindungsgemäße Membranplatte 13, die bezogen auf ihre Mittellängsachse 14 spiegelsymmetrisch aufgebaut ist. Die Membranplatte 13 besteht dabei aus einer Membranträgerplatte 2 und zwei an gegenüberliegenden Seiten der Membranträgerplatte 2 gehaltenen Membranen 1. Die Membranträgerplatte 2 weist einen verdickten Membranplattenrand 15 auf. Der Membranplattenrand 15 trägt von der Stirnseite 16 beanstandet eine umlaufende Nut 5 mit im Wesentlichen U-förmigen Querschnitt. Im Anschluss an diese Nut 5 in Richtung Membranplattenmitte verjüngt sich die Membranträgerplatte 2 im Querschnitt. Dadurch wird zwischen der Membranträgerplatte 2 und der daran gehaltenen Membran 1 eine Druckkammer 17 gebildet, wobei die Membranunterseite 3 im unbeaufschlagten Ruhezustand im Wesentlichen parallel zur Membranträgerplatte 2 verläuft. Die Druckkammer 17 wird durch eine von außen an der Stirnseite 16 der Membranträgerplatte angebrachte Anschlußbuchse (nicht dargestellt) mittels eines Einzelanschlusses an die Sammelleitung des Druckmediums angeschlossen.

Der die Membran 1 abschließende, umlaufende Wulst 4 ist im Wesentlichen U-förmig ausgebildet, wobei der U-Grund 18 in der Montageendstellung im Wesentlichen parallel zum Boden 19 der Nut 5 verläuft und an diesem anliegt. Die beiden U-Schenkel 20 des Wulstes 4 liegen gleichzeitig an den Nutwänden 21 an, so dass der Wulst 4 nach Art eines Haltevorsprungs in der Nut 5 einliegt. An der äußeren, d. h. stirnseitigen Unterkante 22 des Haltevorsprungs ist eine Dichtlippe 23 angebracht. Diese ist mit dem Wulstmaterial einstückig verbunden. In der hier gezeigten Position liegt bereits die Pressenschließkraft einer (nicht abgebildeten) gegenüberliegenden Kammerplatte an, so dass die Dichtlippe 23 aufgrund ihrer Weichheit bereits vollständig in die Kontur der Nut 5 eingepresst ist.

In Richtung auf die Stirnseite 16 der Membranplatte 13 hin wird die Membran 1 von einem Membranrand 11 abgeschlossen, der in einer dafür vorgesehenen Aufnahmekante 24 der Membranträgerplatte 2 einliegt. Der Membranrand 11 wird zur Membranoberfläche 6 hin von einer Dichtleiste 25 abgeschlossen, die vorzugsweise einstückig am Wulstmaterial angeformt ist. Diese Dichtleiste 25 dient der zusätzlichen Abdichtung durch das auf der Membranoberfläche 6 aufliegende Filtertuch 26 hindurch, insbesondere zur Beseitigung von Leckagen. Das Filtertuch 26 liegt sowohl auf den einzelnen Noppen 7 der Membran 1 als auch auf dem ebenen Bereich 12 der Membran 1 auf. Der ebene Bereich 12 ist dabei durch eine Verdickung des Membranmaterials derart verstärkt, dass die Membran 1 hier die gleiche Querschnittsdicke wie im Bereich eines Noppens 7 aufweist.

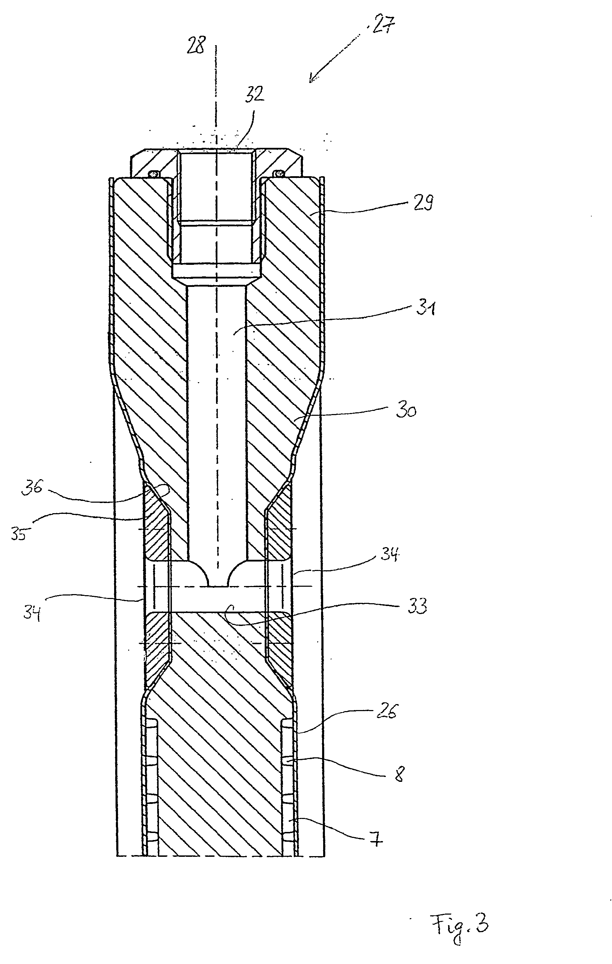

Fig. 3 zeigt eine erfindungsgemäße Kammerplatte 27, die ebenso wie die Membranplatte 13 in Fig. 2 spiegelsymmetrisch um ihre Mittellängsachse 28 aufgebaut ist. Die Kammerplatte 27 weist einen Kammerplattenrand 29 auf, der wie bei der Membranplatte 13 wulstartig verdickt ist. In der Montageendposition liegen dabei die parallel zueinander verlaufenden Plattenränder 15, 29 aneinander an und bilden eine Filtrationskammer zur Aufnahme der Suspension. An den Kammerplattenrand 29 schließt sich in Richtung auf die Kammerplattenmitte eine Dichtrandschräge 30 an, in deren Verlauf sich der Querschnitt der Kammerplatte 27 verjüngt, so dass zwischen der Kammerplatte 27 und der Membran 1 einer anliegenden Membranplatte 2 (nicht dargestellt) ein Filtrationsraum entsteht. In der Kammerplatte 27 ist in weiterhin ein Trübeeinlauf angeordnet, der im Wesentlichen aus einem Einlaufkanal 31 besteht. Dieser Kanal 31 führt von der Stirnseite 32 der Kammerplatte 27 durch den Kammerplattenrand 29 und die Dichtrandschräge 30 hindurch in das Innere der Kammerplatte 27 hinein. Dort endet der Kanal 31 in einem T-förmigen Endstück 33, welches von zwei Einlauföffnungen 34 abgeschlossen wird. Die beiden Einlauföffnungen 34 verbinden den Einlaufkanal 31 mit den zwei Filtrationskammern, die an gegenüberliegenden Seiten der Kammerplatte 27 liegen. Der Austrittskanal 33 erstreckt sich dabei im Bereich der Einlauföffnung 34 im Wesentlichen senkrecht zur Kammerplattenlängsrichtung, die parallel zur Mittellängsachse 28 verläuft. An den Bereich der Einlauföffnung 34 in Richtung Kammerplattenmitte anschließend weist die Kammerplatte 27 Noppen 7 auf, die, wie bereits von der Membran 1 bekannt, als Abstützelemente für das Filtertuch 26 dienen, welches die gesamte Kammerplattenoberfläche bedeckt. Im Bereich der Einlauföffnung 34 wird das Filtertuch 26 durch einen Halteflansch 35 an der Kammerplatte 27 fixiert. Zur Aufnahme des Halteflansches 35 weist die Kammerplatte 27 einen Aufnahmebereich 36 auf, der durch eine weitere Verjüngung des Querschnittes der Kammerplatte 27 entsteht. Halteflansch 35 und Aufnahmebereich 36 sind dabei derart ausgebildet, dass die Oberfläche des in der Aufnahme 36 einliegenden Halteflansches 35 in einer Ebene mit der Oberfläche der Noppen 7 der Kammerplatte 27 liegt.

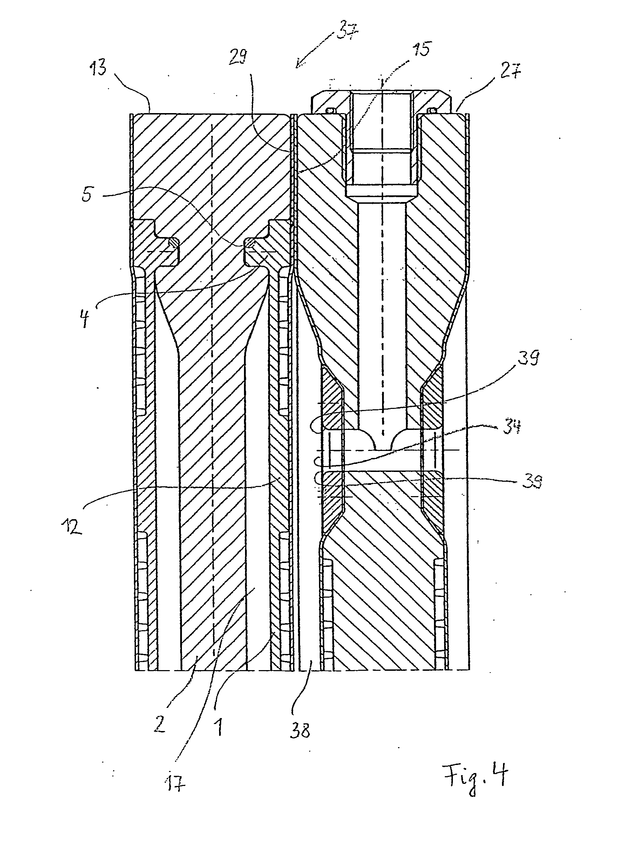

Fig. 4 zeigt schließlich einen Teil eines erfindungsgemäßen Plattenpakets 37 mit einer erfindungsgemäßen Membranplatte 13 und einer daran anliegenden erfindungsgemäßen Kammerplatte 27. Durch den Pressendruck kontaktieren sich die beiden Platten 13, 27 im Bereich ihrer Plattenränder 15, 29, wodurch der Wulst 4 der Membran 1 in der Nut 5 der Membranträgerplatte 2 fest fixiert wird. Zwischen Kammerplatte 27 und Membran 1 der Membranplatte 13 ist die Filtrationskammer 38 ausgebildet. Wird während der Pressfiltration die Druckkammer 17 durch einen in der Membranträgerplatte 2 vorhandenen Druckmedienanschluss (nicht dargestellt) befüllt, so drückt die Membran 1 auf den Filterkuchen in Richtung Kammerplatte 27. Der ebene Bereich 12 der Membran 1 ist dabei derart angeordnet und dimensioniert, dass er sich bei ausreichend hohem Druck auf die Einlauföffnung 34 legt und dabei deren Öffnungsränder 39 überlappt. Ein Eindringen der Membran 1 in die Einlassöffnung 34 ist dadurch ausgeschlossen.

### Bezugszeichenliste

- 1: Membran
- 2: Membranträgerplatte
- 3: Membranunterseite
- 4: Wulst
- 5: Nut
- 6: Membranoberfläche
- 7: Noppen
- 8: Ablaufkanal
- 9: Ablaufbohrung
- 10: Eckbohrung
- 11: Membranrand
- 12: ebener Bereich
- 13: Membranplatte
- 14: Mittellängsachse
- 15: Membranplattenrand
- 16: Stirnseite
- 17: Druckkammer
- 18: U-Grund
- 19: Nutboden
- 20: U-Schenkel
- 21: Nutwand
- 22: Unterkante
- 23: Dichtlippe
- 24: Aufnahmekante
- 25: Dichtleiste
- 26: Filtertuch
- 27: Kammerplatte
- 28: Mittellängsachse
- 29: Kammerplattenrand
- 30: Dichtrandschräge
- 31: Trübeeinlauf
- 32: Stirnseite
- 33: Endstück
- 34: Einlauföffnung
- 35: Halteflansch
- 36: Aufnahmebereich
- 37: Plattenpaket
- 38: Filtrationskammer
- 39: Öffnungsrand

## Patentansprüche

1. Aus alternierend nebeneinander angeordneten Membranplatten (13) und Kammerplatten (27) zusammengesetztes Plattenpaket (37) für eine Filterpresse, dessen Membranplatten (13) eine Membranträgerplatte (2) mit einer daran fixierten Membran (1) umfassen und dessen Kammerplatten (27) mindestens einen Trübeeinlauf (31,33,34) mit einer vom Kammerplattenrand (29) beabstandeten Einlauföffnung (34) zum Einbringen einer Suspension in eine Filtrationskammer (38) umfassen, wobei die Filtrationskammern (38) zwischen jeweils einer Membranplatte (13) und einer Kammerplatte (27) ausgebildet sind,
**gekennzeichnet durch**
eine Membran (1) mit einer von einem Membranrand (11) eingeschlossenen Membranoberfläche (6) ohne Durchbrüche mit einer Vielzahl von Abstützelementen (7) nach Art von Rippen oder Noppen auf der Membranoberfläche (6) und mit wenigstens einem vom Membranrand (11) beabstandeten, gegenüber der Einlauföffnung (34) eines Trübeeinlaufs (31,33,34) in der Kammerplatte (27) angeordneten, im Wesentlichen ebenen Bereich (12) auf der Membranoberfläche (6), dessen Oberfläche größer ist als die Oberfläche eines Abstützelements (7).

2. Plattenpaket (37) nach Anspruch 1,
**dadurch gekennzeichnet,**
**dass** der im Wesentlichen ebene Bereich (12) der Membran (1) die Einlauföffnung (34) vollständig überdeckt.

3. Plattenpaket (37) nach Anspruch 1 oder 2,
**dadurch gekennzeichnet,**
**dass** der ebene Bereich (12) auf der Membranoberfläche (6) eine Verstärkung aufweist.

4. Plattenpaket (37) nach Anspruch 3,
**dadurch gekennzeichnet,**
**dass** die Verstärkung eine Verdickung des Membranmaterials ist.

5. Plattenpaket (37) nach einem der Ansprüche 1 bis 3,
**dadurch gekennzeichnet,**
- **dass** die Verstärkung eine Einlage des Verstärkungsmaterials in das Membranmaterial ist.

6. Plattenpaket (37) nach einem der Ansprüche 1 bis 5,
**gekennzeichnet durch**
- einen umlaufenden Wulst (4) an der Membran (1) zum Eingreifen in eine Nut (5) der Membranträgerplatte (2) und
- eine fest am Wulst (4) angeformte Dichtlippe (23).

7. Plattenpaket (37) nach Anspruch 6,
**gekennzeichnet durch**
eine am Wulst (4) ausgebildete Dichtleiste (25).

8. Plattenpaket (37) nach Anspruch 7,
**dadurch gekennzeichnet,**
**dass** die Wulst (4) der Dichtlippe (23) abgewandt angeordnet ist.

9. Plattenpaket (37) nach einem der Ansprüche 6 bis 8,
**dadurch gekennzeichnet,**
**dass** das Wulstmaterial mit dem Membranmaterial identisch ist.

10. Plattenpaket (37) nach einem der Ansprüche 6 bis 9,
**dadurch gekennzeichnet,**
**dass** das Wulstmaterial eine Shorehärte von etwa 90° ShA aufweist.

11. Plattenpaket (37) nach einem der Ansprüche 6 bis 10,
**dadurch gekennzeichnet,**
**dass** das Dichtlippenmaterial eine geringere Shorehärte als das Wulstmaterial aufweist.

12. Plattenpaket (37) nach einem der Ansprüche 6 bis 11,
**dadurch gekennzeichnet,**
**dass** der Wulst (4) nach Art eines U-förmigen Haltevorsprungs ausgebildet ist und die Dichtlippe (23) an der äußeren Unterkante (22) des Haltevorsprungs angeformt ist.

13. Plattenpaket (37) nach einem der Ansprüche 6 bis 12,
**dadurch gekennzeichnet,**
**dass** das Dichtlippenmaterial und das Wulstmaterial farblich unterschiedlich ausgebildet sind.

14. Plattenpaket (37) nach einem der Ansprüche 6 bis 13,
**gekennzeichnet durch**
eine Membranträgerplatte (2) mit einer umlaufenden Nut (5) zur Aufnahme der Wulst (4) einer Membran (1).

15. Plattenpaket (37) nach einem der Ansprüche 1 bis 14,
**gekennzeichnet durch**
eine um ihre Mittellängsachse (14) spiegelsymmetrisch aufgebaute Membranplatte (13).

16. Plattenpaket (37) nach einem der Ansprüche 1 bis 15,
**dadurch gekennzeichnet,**
**dass** sich ein Austrittskanal (33) der Kammerplatte (27) im Bereich der Einlauföffnung (34) im Wesentlichen senkrecht zur Kammerplattenlängsrichtung erstreckt.

17. Plattenpaket (37) nach einem der Ansprüche 1 bis 16,
**dadurch gekennzeichnet,**
**dass** die Einlauföffnung (34) der Kammerplatte (27) an einen Einlaufkanal (31) anschließt, der sich vom Kammerplattenrand (29) in die Dichtrandschräge (30) oder in das Kammerplatteninnere hinein erstreckt.

18. Plattenpaket (37) nach einem der Ansprüche 1 bis 17,
**gekennzeichnet durch**
eine Kammerplatte (27) mit einem Trübeeinlauf (31), welcher ein Rückschlagventil aufweist.

19. Plattenpaket (37) nach einem der Ansprüche 1 bis 18,
**dadurch gekennzeichnet,**
**dass** die Kammerplatten (27) um ihre Mittellängsachse (28) spiegelsymmetrisch aufgebaut ist.

## Claims

1. Plate stack (37) for a filter press, which plate stack is composed of membrane plates (13) and chamber plates (27) arranged alternately next to one another and of which the membrane plates (13) comprise a membrane carrier plate (2) with a membrane (1) fixed to it and of which the chamber plates (27) comprise at least one sludge inflow (31, 33, 34) with an inflow orifice (34), spaced apart from the chamber-plate edge (29), for introducing a suspension into a filtration chamber (38), the filtration chambers (38) being formed in each case between a membrane plate (13) and a chamber plate (27), **characterized by** a membrane (1) having a membrane surface (6) without perforations, which is enclosed by a membrane margin (11) and which has a multiplicity of supporting elements (7) in the manner of ribs or bosses on the membrane surface (6), and having at least one essentially plane region (12) on the membrane surface (6) which is spaced apart from the membrane margin (11) and is arranged opposite to the inflow orifice (34) of a sludge inflow (31, 33, 34) in the chamber plate (27) and the surface of which is larger than the surface of a supporting element (7).

2. Plate stack (37) according to Claim 1, **characterized in that** the essentially plane region (12) of the membrane (1) completely covers the inflow orifice (34).

3. Plate stack (37) according to Claim 1 or 2, **characterized in that** the plane region (12) on the membrane surface (6) has a reinforcement.

4. Plate stack (37) according to Claim 3, **characterized in that** the reinforcement is a thickening of the membrane material.

5. Plate stack (37) according to one of Claims 1 to 3, **characterized in that**
- the reinforcement is an insert of the reinforcing material into the membrane material.

6. Plate stack (37) according to one of Claims 1 to 5, **characterized by**
- a peripheral bead (4) on the membrane (1) for engagement into a groove (5) of the membrane carrier plate (2), and
- a sealing lip (23) integrally formed firmly on the bead (4).

7. Plate stack (37) according to Claim 6, **characterized by** a sealing strip (25) formed on the bead (4).

8. Plate stack (37) according to Claim 7, **characterized in that** the bead (4) is arranged so as to face away from the sealing lip (23).

9. Plate stack (37) according to one of Claims 6 to 8, **characterized in that** the bead material is identical to the membrane material.

10. Plate stack (37) according to one of Claims 6 to 9, **characterized in that** the bead material has a Shore hardness of about 90° ShA.

11. Plate stack (37) according to one of Claims 6 to 10, **characterized in that** the sealing lip material has a lower Shore hardness than the bead material.

12. Plate stack (37) according to one of Claims 6 to 11, **characterized in that** the bead (4) is designed in the manner of a U-shaped holding projection, and the sealing lip (23) is integrally formed on the outer lower edge (22) of the holding projection.

13. Plate stack (37) according to one of Claims 6 to 12, **characterized in that** the sealing lip material and bead material are designed differently in terms of colour.

14. Plate stack (37) according to one of Claims 6 to 13, **characterized by** a membrane carrier plate (2) with a peripheral groove (5) for receiving the bead (4) of a membrane (1).

15. Plate stack (37) according to one of Claims 1 to 14, **characterized by** a membrane plate (13) which is constructed mirror-symmetrically about its longitudinal centre axis (14).

16. Plate stack (37) according to one of Claims 1 to 15, **characterized in that** an outlet duct (33) of the chamber plate (27) extends in the region of the inflow orifice (34) essentially perpendicularly to the longitudinal direction of the chamber plate.

17. Plate stack (37) according to one of Claims 1 to 16, **characterized in that** the inflow orifice (34) of the chamber plate (27) adjoins an inflow duct (31) which extends from the chamber plate margin (29) into the sealing margin slope (30) or into the chamber plate interior.

18. Plate stack (37) according to one of Claims 1 to 17, **characterized by** a chamber plate (27) with a sludge inflow (31) which has a nonreturn valve.

19. Plate stack (37) according to one of Claims 1 to 18, **characterized in that** the chamber plate (27) is constructed mirror-symmetrically about its longitudinal centre axis (28).

## Revendications

1. Empilement de plaques (37) pour un filtre-presse, composé de plaques à membrane (13) et de plaques à chambre (27) agencées en alternance les unes à côté des autres, dont les plaques à membrane (13) comprennent une plaque porte-membrane (2) avec une membrane (1) fixée sur celle-ci, et dont les plaques à chambre (27) comprennent au moins une entrée de liquide trouble (31, 33, 34) avec une ouverture d'entrée (34), écartée de la bordure (29) des plaques à chambre pour introduire une suspension dans une chambre de filtration (38), les chambres de filtration (38) étant réalisées respectivement entre une plaque à membrane (13) et une plaque à chambre (27),
**caractérisé par** une membrane (1) avec une surface de membrane (6), enfermée par une bordure de membrane (11), dépourvue de traversées et dotée d'une pluralité d'éléments de soutien (7) du genre nervures ou boutons sur la surface (6) de la membrane, et comportant au moins une zone essentiellement plane (12) sur la surface (6) de la membrane, ladite zone étant écartée de la bordure de membrane (11) et agencée dans la plaque à chambre (27) à l'opposé de l'ouverture d'entrée (34) d'une entrée de liquide trouble (31, 33, 34), et dont la surface est supérieure à la surface d'un élément de soutien (7).

2. Empilement de plaques (37) selon la revendication 1,
**caractérisé en ce que** la zone essentiellement plane (12) de la membrane (1) recouvre complètement l'ouverture d'entrée (34).

3. Empilement de plaques (3 7) selon la revendication 1 ou 2,
**caractérisé en ce que** la zone plane (12) sur la surface (6) de la membrane comprend un renfort.

4. Empilement de plaques (37) selon la revendication 3,
**caractérisé en ce que** le renfort est un épaississement du matériau de la membrane.

5. Empilement de plaques (3 7) selon l'une des revendications 1 à 3,
**caractérisé en ce que** le renfort est un insert d'un matériau de renfort dans le matériau de membrane.

6. Empilement de plaques (37) selon l'une des revendications 1 à 5,
**caractérisé par** un bourrelet périphérique (4) sur la membrane (1) destiné à s'engager dans une gorge (5) de la plaque porte-membrane (2), et par une lèvre d'étanchéité (23) conformée de manière fixe sur le bourrelet (4).

7. Empilement de plaques (37) selon la revendication 6,
**caractérisé par** une barrette d'étanchéité (25) réalisée sur le bourrelet (4).

8. Empilement de plaques (37) selon la revendication 7,
**caractérisé en ce que** le bourrelet (4) est agencé détourné de la lèvre d'étanchéité (23).

9. Empilement de plaques (37) selon l'une des revendications 6 à 8,
**caractérisé en ce que** le matériau du bourrelet est identique au matériau de la membrane.

10. Empilement de plaques (37) selon l'une des revendications 6 à 9,
**caractérisé en ce que** le matériau du bourrelet présente une dureté Shore d'environ 90° ShA.

11. Empilement de plaques (37) selon l'une des revendications 6 à 10,
**caractérisé en ce que** le matériau de la lèvre d'étanchéité présente une dureté Shore plus faible que celle du matériau du bourrelet.

12. Empilement de plaques (37) selon l'une des revendications 6 à 11,
**caractérisé en ce que** le bourrelet (4) est réalisé à la manière d'une saillie de maintien en forme de U, et **en ce que** la lèvre d'étanchéité (23) est conformée sur l'arête inférieure extérieure (22) de la saillie de maintien.

13. Empilement de plaques (37) selon l'une des revendications 6 à 12,
**caractérisé en ce que** le matériau de la lèvre d'étanchéité et le matériau de la membrane sont réalisés de couleurs différentes.

14. Empilement de plaques (37) selon l'une des revendications 6 à 13,
**caractérisé par** une plaque porte-membrane (2) avec une gorge périphérique (5) pour recevoir le bourrelet (4) d'une membrane (1).

15. Empilement de plaques (37) selon l'une des revendications 1 à 14,
**caractérisé par** une plaque à membrane (13) de réalisation symétrique par rapport à son axe longitudinal médian (14).

16. Empilement de plaques (37) selon l'une des revendications 1 à 15,
**caractérisé en ce qu'**un canal de sortie (33) de la plaque à chambre (27) s'étend dans la zone de l'ouverture d'entrée (34) essentiellement perpendiculairement à la direction longitudinale de la plaque à chambre.

17. Empilement de plaques (37) selon l'une des revendications 1 à 16,
**caractérisé en ce que** l'ouverture d'entrée (34) de la plaque à chambre (27) se raccorde à un canal d'entrée (31) qui s'étend depuis la bordure (29) de la plaque à chambre jusque dans le chanfrein (30) de la bordure d'étanchéité ou jusqu'à l'intérieur de la plaque à chambre.

18. Empilement de plaques (37) selon l'une des revendications 1 à 17,
**caractérisé par** une plaque à chambre (27) dotée d'une entrée de liquide trouble (31) qui comporte un clapet antiretour.

19. Empilement de plaques (37) selon l'une des revendications 1 à 18,
**caractérisé en ce que** les plaques à la chambre (27) sont réalisées symétriques par rapport à leur axe longitudinal médian (28).
